# EUROPEAN PATENT APPLICATION

(11) **EP 4 609 938 A1**
(43) Date of publication of application: **03.09.2025**
(21) Application number: 25161139.8
(22) Date of filing: 28.02.2025
(51) Int. Cl.: B01D 53/04

(54) **MODULAR GROOVED CONTACTOR STACKS FOR CARBON DIOXIDE REMOVAL**

(30) Priority: 01.03.2024 GB 202403459
(71) Applicant: Sagentia Ltd, Cambridgeshire CB22 7GG (GB)
(72) Inventor: POTTER, ANDREW ROBERT, CAMBRIDGE, CB22 7GG (GB); BYRNE, LOUISE ANNE, CAMBRIDGE, CB22 7GG (GB); LOWDELL, CHRISTOPHER, CAMBRIDGE, CB22 7GG (GB)
(74) Representative: Mathys & Squire

(57) **Abstract**

The present invention relates to a module for a contactor stack, for use in air purification. In particular, the present invention relates to a CO₂ removing module, a contactor stack comprising a plurality of said CO₂ removing modules, a method of removing CO₂ from air using the contactor stack, a method of retrofitting the contactor stack into a submarine atmospheric control system, and a submarine comprising the contactor stack. In one aspect, the present invention relates to a CO₂ removing module, for use in a contactor stack, the module comprising: a first grooved plate and a second grooved plate, wherein one or more spaces between the inner faces of the first grooved plate and the second grooved plate define one or more first channels; a top plate to seal the top-most first channel; a bottom plate to seal the bottom-most first channel; and wherein the one or more first channels contain a CO₂ removing material.

## Description

### FIELD OF THE INVENTION

The present invention relates to a module for a contactor stack, for use in air purification. In particular, the present invention relates to a CO₂ removing module, a contactor stack comprising a plurality of said CO₂ removing modules, a method of removing CO₂ from air using the contactor stack, a method of retrofitting the contactor stack into a submarine atmospheric control system, and a submarine comprising the contactor stack.

### BACKGROUND OF THE INVENTION

In a submarine environment, it is critical to remove carbon dioxide (CO₂) from the atmospheric air to ensure the safety and wellbeing of the submarine crew. Current systems rely on direct liquid-air contactors where CO₂ from the air dissolves into the absorber liquid Although current technology is proven, atmospheric quality in submarines is usually suboptimal with higher than desired levels of CO₂. Therefore, there is a need for improved CO₂ scrubbing technologies to reduce the level of ambient CO₂, particularly for long duration submarine voyages.

It is an object of this invention to provide a technology which is more effective at removing pollutants such as CO₂ from the atmosphere than the existing legacy technologies stated above. Whilst the primary use of this invention is for CO₂ removal from air, it may be used to remove other pollutants, the term "pollutants" as used herein includes CO₂.

It is a further object of this invention to provide an improved CO₂ removal technology which can be retrofitted to existing submarine atmospheric control systems.

Depending on the active chemistry used, the CO₂ binding process may be absorption, adsorption, dissolution or other molecular process. For the purposes of simplicity, this document will refer to absorption, however this should not be read as limiting the document to this specific process as the principles of the invention apply to any molecular process.

Solid CO₂ absorbers operating in a pressure-swing system configuration are a promising technology for air scrubbing, but suffer from some limitations. One limitation is that in order to provide continuous air scrubbing the system must maintain part of the system in 'absorb' mode and another part in 'desorb mode', effectively meaning that large parts of the system must be duplicated. This is space inefficient and physical space is at a premium on a submarine. If absorb rates and desorb rates are dissimilar, then this problem is exacerbated, as the system must be sized to accommodate the slowest process.

Furthermore, solid CO₂ absorbers operating in a pressure-swing system configuration will typically also require a temperature-swing. Heating aids with the desorption of CO₂ from solid CO₂ absorbers, whilst cooling aids the absorption of CO₂ onto solid CO₂ absorbers. However, this means that switching between heating and cooling is required in order to cycle between absorption and desorption modes of the solid CO₂ absorber.

### SUMMARY OF THE INVENTION

The present invention replaces the CO₂-removing liquid with a solid remover, immobilised on contactor plates. The contactor stacks comprise a plurality of modules. Each module comprises one or more gas flow channels and one or more thermal transfer fluid channels. The channels are formed from grooved or shaped plates. As the plates are built up into a stack, flow pathways are created due to the shape of the plates/channels and the voids left between the plates. These pathways serve to have both gas and thermal control fluids in close proximity, but separated by plate material. The contactor stacks comprise a plurality of modules are described in UK patent application GB2403459.7 the entirety of which is incorporated by reference.

Fluidic manifolding and connection to the wider system is achieved by either internal stack manifolds, also formed by the arrangement of individual plates, or by an external manifold attached to the stack post-formation.

Each gas flow channel is loaded with a material which removes pollutants, such as CO₂ from the gas flowing within the channels. The pollutant removing material may be a Metal-Organic Framework (MOF), amine, covalent organic framework, zeolite, a polymer-based absorber, or other material with appropriate CO₂ removal functionality.

The thermal transfer fluid channel allows a thermal transfer fluid or gas to flow alongside the gas flow channel. This fluid may be at a lower temperature than the gas flow channel to cool it or be at a higher temperature than the gas flow channel to heat it. During operation a thermal management system may vary the temperature of the liquid in the thermal transfer fluid channel in order to optimise the CO₂ absorption and/or desorption performance. For example, a stack may benefit from cooling during an absorption cycle and heating during desorption. In this case, the thermal transfer fluid can be easily switched from a cold source to a heat source.

As there will be multiple stacks operating in asynchronous cycles (e.g. one in absorb whilst one is in desorb) a switchable pair of hot and cold thermal fluid sources is appealing from a system efficiency standpoint.

The grooved plates may be made from metal, ceramic or other suitable materials for airflow / thermal management which are also capable of immobilising the selected CO₂ remover.

The thickness and porosity of the CO₂ remover in the gas channel is optimised for the thermal gradient and uptake kinetics.

This invention offers a modular and scalable approach to building new submarine CO₂ removal systems.

In operation, it is more efficient than existing systems, offers deterministic flow regimes, improved flexibility in the selection of CO₂ removal material and greater flexibility when integrating with new submarine builds or refits of existing submarines.

In a first aspect, the present invention relates to a CO₂ removing module, for use in a contactor stack, the module comprising: a first grooved plate and a second grooved plate, wherein one or more spaces between the inner faces of the first grooved plate and the second grooved plate define one or more first channels; a top plate to seal the top-most first channel; a bottom plate to seal the bottom-most first channel; and wherein the one or more first channels contain a CO₂ removing material.

In a second aspect, the present invention relates to a CO₂ removing module, for use in a contactor stack, the module comprising, a conduit structure having a crenelated perimeter, wherein the spaces within the crenelations define one or more first channels, and wherein the one or more first channels contain a CO₂ removing material.

In a third aspect, the present invention relates to a contactor stack comprising a plurality of modules as defined in the first aspect, wherein said modules are stacked such that the one or more spaces between the outer face of the first grooved plate and the outer face of the second grooved plate of proximate CO₂ removing modules define one or more second channels.

In a fourth aspect, the present invention relates to a contactor stack comprising a plurality of modules as defined in the second aspect, wherein the conduit structures having crenelated perimeters are held proximate to each other such that the one or more spaces between the outer faces of proximate conduit structures having crenelated perimeters define one or more second channels.

In a fifth aspect, the present invention relates to a method of removing CO₂ from air, using the contactor stack as defined herein, the method comprising: flowing the air through the one or more first channels; and flowing a thermal transfer fluid through the one or more second channels.

In a sixth aspect, the present invention relates to a method of retrofitting a contactor stack as defined herein, into a submarine atmospheric control system.

In a seventh aspect, the present invention relates to a submarine comprising one or more contactor stacks as defined herein.

### BRIEF DESCRIPTION OF THE FIGURES

Figure 1 shows a pair of CO₂ removal plates, comprising an A-plate and a B-plate.
Figure 2 shows two A-plates and two B-plates plates arranged to provide four gas flow channels and three thermal transfer fluid channels.
Figure 3 shows an isometric view of multiple A and B plates arranged to form a set of gas flow and thermal transfer fluid channels.

### DETAILED DESCRIPTION OF THE INVENTION

In a first aspect, the present invention relates to a CO₂ removing module, for use in a contactor stack, the module comprising: a first grooved plate and a second grooved plate, wherein one or more spaces between the inner faces of the first grooved plate and the second grooved plate define one or more first channels; a top plate to seal the top-most first channel; a bottom plate to seal the bottom-most first channel; and wherein the one or more first channels contain a CO₂ removing material.

In a second aspect, which is an alternative to the first aspect, the present invention relates to a CO₂ removing module, for use in a contactor stack, the module comprising, a conduit structure having a crenelated perimeter, wherein the spaces within the crenelations define one or more first channels, and wherein one or more first channels contain a CO₂ removing material.

For example, the first grooved plate and the second grooved plate, or the conduit structure having a crenelated perimeter, may be made from metal or ceramic. For example, the metal may be copper, aluminium, steel, titanium, brass, or nickel alloys. For example, the ceramic may be silicon carbide (SiC), alumina (Al₂O₃), cordierite (2MgO·2Al₂O₃·5SiO₂), zirconia (ZrO₂), mullite (3Al₂O₃·2SiO₂), or silicon nitride (Si₃N₄). Alternatively, the first grooved plate and the second grooved plate, or the conduit structure having a crenelated perimeter, may be made from graphite or polymers, such as polytetrafluoroethylene, polyether ether ketone, or polyvinyl chloride. Although any material may be used that has sufficient rigidity, thermal conductivity, and is preferably capable of accommodating the CO₂ removing material.

The CO₂ removing material may be of any suitable dimensions or structure so long as it is located within the one or more first channels and allows airflow through the one or more first channels. Typically, the CO₂ removing material will be a porous material or a granular material. A porous material or a granular material may fill the entire volume of the channel and still allow airflow due to its porosity. Preferably, the one or more first channels are filled or part-filled with a CO₂ removing material, such as a porous material or a granular material. Preferably, substantially all of the volume of the one or more first channels is filled with a porous or a granular CO₂ removing material.

A porous material or a granular material may be placed within the channel during manufacture, prior to use, or during a method of retrofitting into a submarine atmospheric control system as described herein.

In one example, the inner faces of the first grooved plate and the second grooved plate, or the conduit structure having a crenelated perimeter, comprise a CO₂ removing material, as described herein. A CO₂ removing material may be attached to the inner faces of the first grooved plate and the second grooved plate, or the conduit structure having a crenelated perimeter, and/or may be loose within the one or more first channels.

For example, the one or more first channels may be filled or part-filled with a porous three-dimensional support for the CO₂ removing material, and/or the inner faces of the first grooved plate and the second grooved plate, or the conduit structure having a crenelated perimeter, may comprise a porous three-dimensional support for the CO₂ removing material. This increases the surface area of the inner faces of the first grooved plate and the second grooved plate such that more CO₂ removing material can be supported, and thus more CO₂ can be absorbed per unit of surface area of the inner faces of the first grooved plate and the second grooved plate.

Various three-dimensional support structures may be used, so long as they provide increased surface area and are capable of accommodating the CO₂ removing material, so long as they allow airflow through the first channel in which they are situated.

The top plate and/or the bottom plate may be made from the same material as the first grooved plate and the second grooved plate. The top plate and/or the bottom plate may also comprise a CO₂ removing material, as described herein, and may be filled or part-filled with a porous three-dimensional support for the CO₂ removing material.

Preferably, the conduit structure having a crenelated perimeter is substantially prismatic. In the context of the present invention, the term 'substantially prismatic' refers to a three-dimensional geometric shape made up of a two dimensional shaped base and a second two dimensional shaped base which is a translated copy (rigidly moved without rotation) of the first, in the context of the present invention the prism has a hollow inner space, i.e. is a prismatic shell. The substantially prismatic shape optimises the flow of air or heat transfer fluid through the conduit structure.

Preferably, the crenelations in the perimeter are substantially coincidental with the crenelations of the opposing face of perimeter. This means that the module can be easily arranged with one or more further module such that the spaces between the outer faces of proximate conduit structures having crenelated perimeters define one or more second channels. This arrangement advantageously allows for proximate arrangement of the modules with a shared top plate and/or bottom plate.

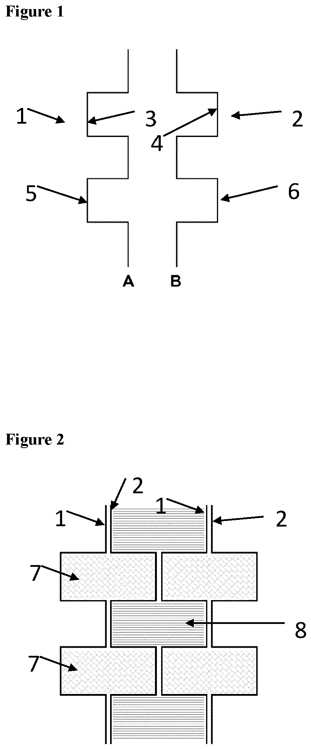

Preferably, the crenelations in the perimeter are substantially square or rectangular, such that the spaces within each pair of substantially coincidental crenelations define one or more substantially rectangular first channels. Crenelations having other shapes are also envisioned, for example, the crenelations may have semicircular, triangular, or irregular, shapes, or any combination thereof. Similarly, it is preferable that the grooves of the first grooved plate and the second grooved plate are substantially coincidental, and/or the that grooves the grooves are substantially square or rectangular, although semicircular, triangular, or irregular, shaped grooves, or any combination thereof are also envisioned. Exemplary crenelations/grooves that are both substantially coincidental and substantially rectangular are shown in Figures 1 to 3. These Figures further demonstrate how such a structure may be arranged to provide substantially rectangular first and second channels.

In either the first or second aspect, the CO₂ removing material, comprised within the CO₂ removing module may be a Metal-Organic Framework (MOF), an amine, a covalent organic framework, a zeolite, a polymer-based absorber, or another material with appropriate CO₂ removal functionality. For example, the CO₂ removing material may be a zeolite. For example, the CO₂ removing material may be a hydroxide base, such as sodium hydroxide, potassium hydroxide, lithium hydroxide, or calcium hydroxide. Preferably the amine is a solid amine, for example, the solid amine may be polyethyleneimine, a melamine based resin, or amine functionalised silica. Preferably the amine is a primary or secondary amine.

In a third aspect, the present invention relates to a contactor stack comprising a plurality of modules as defined in the first aspect, wherein said modules are stacked such that the one or more spaces between the outer face of the first grooved plate and the outer face of the second grooved plate of proximate CO₂ removing modules define one or more second channels.

In a fourth aspect, the present invention relates to a contactor stack comprising a plurality of modules as defined in the second aspect, wherein the conduit structures having crenelated perimeters are held proximate to each other such that the one or more spaces between the outer faces of proximate conduit structures having crenelated perimeters define one or more second channels.

A top plate and/or a bottom plate as described herein, may also be used in the contactor stack of the fourth aspect to provide a top and bottom surface. The space defined between the internal face of the top plate or bottom plate and the outer face of one or more conduit structure may allow for provision of one or more additional second channel.

In either of the third or fourth aspects, the contactor stack preferably comprises three or more modules as defined herein, more preferably five or more, even more preferably ten or more.

In either of the third or fourth aspects, the one or more first channels may be configured such that they form a single continuous pathway through the stack. This may be achieved with further connection between the first channels, e.g. using pipes. Alternatively, the one or more first channels may be configured such that they form multiple parallel pathways through the stack.

In either of the third or fourth aspects, the contactor stack may comprise a means for flowing a thermal transfer fluid through the one or more second channels, such as a pump. The contactor stack may comprise a reservoir for storing thermal transfer fluid. The contactor stack may comprise a cooling means, or a heating means, suitable for cooling or heating the thermal transfer fluid, such as a heat exchanger or a thermal communication with an on-board cooling source or heat source. Desorption of CO₂ from the CO₂ removing material can be promoted with heat.

In either of the third or fourth aspects, the contactor stack may further comprise a fluidic manifold for connection to one or more further components of a submarine atmospheric control system, such as means for flowing a thermal transfer fluid or a reservoir for storing thermal transfer fluid.

In either of the third or fourth aspects, the contactor stack may further comprise one or more sensors, for example, one or more heat sensor, CO₂ sensor, one or more sensor for other pollutants, one or more air quality sensor, one or more pressure sensor, and/or one or more sensor which detects or calculates pollutant loading on the CO₂ removing material. The contactor stack may further comprise a timer. The contactor stack may further comprise a controller, which may be configured to adjust the mode of the contactor stack, for example by adjusting the rate, direction, or destination of airflow, or by adjusting the cooling or heating of thermal transfer fluid, in response to readings from the sensors and/or in response to time elapsed.

In either of the third or fourth aspects, the contactor stack may further comprise a means for directing the air flow exiting the contactor stack, such as one or more valves. For example, clean air with a reduced CO₂ may be directed to the atmosphere of the submarine. Pollutants such as CO₂ that are desorbed from the CO₂ removing material during desorption mode may be directed to waste storage or to outside the submarine.

For example, the thermal transfer fluid may be water, a mineral oil, a silicone oil, ethylene glycol, propylene glycol, or a combination thereof.

In a fifth aspect, the present invention relates to a method of removing CO₂ from air, using the contactor stack as defined herein, the method comprising: flowing the air through the one or more first channels; and flowing a thermal transfer fluid through the one or more second channels.

The one or more first channels comprise CO₂ removing material, and thus remove CO₂ from the air that flows through the first channels. Flowing a thermal transfer fluid through the one or more second channels regulates the temperature of the modules. Flowing the thermal transfer fluid through the one or more second channels can be used to either cool the modules or heat the modules. Preferably, the method further involves cooling the thermal transfer fluid, for example using a chiller or any other cooling means known in the art. A submarine may have an on-board cooling system that can be utilised. Cooling is understood to refer to the process of reducing the temperature of the thermal transfer fluid by removing heat energy. Cooling may cause a decrease in temperature or may maintain a stable temperature in order to prevent an increase in temperature. Heating is understood to refer to increasing the temperature to a temperature that is higher than the temperature outside of the system, for example, the atmosphere in the submarine cabin. The optimum temperature to encourage absorption, and the optimum temperature to encourage desorption, will both depend on the type of CO₂ removing material.

The flow of air through the one or more first channels may be achieved by applying directed turbulent or laminar flow of the incoming air. The flow of air through the one or more first channels may be applied using a fan or a pump, such as a vacuum pump.

The method may further comprise a desorption mode, wherein airflow from one or more first channels is directed to a waste storage container and wherein the thermal transfer fluid in second channels adjacent to said first channels is preferably heated, and preferably vacuum is applied to the CO₂ removing material, in order to cause desorption of CO₂ and/or other pollutants from the CO₂ removing material. The desorption mode may occur subsequently or simultaneously to the absorption mode. This means that desorption to refresh the CO₂ removing material may take place without the need to cease ongoing CO₂ removal. Preferably, the method further involves heating the thermal transfer fluid during desorption, for example using a heater or any other heating means known in the art. A submarine may have an on-board heating system or waste heat that can be utilised.

The method may further comprise replacement of one or more of the modules in the contactor stack with a fresh module as described herein. This allows for the continued removal of CO₂ and/or other pollutants from the air without the need for ceasing operation of the whole system. For example, a single module may be isolated by ceasing the flow of air and thermal transfer fluid in first and second channels associated with said module, removing the module from the contactor stack, replacing the module with a new module, and restarting the flow of air and thermal transfer fluid. The flow of air and thermal transfer fluid need only be ceased in channels comprises within or adjacent to the module to be exchanged. This means that modules can be replaced without the need to cease ongoing CO₂ removal.

The method may further comprise adjusting the mode of the contactor stack, for example by adjusting the rate, direction, or destination of airflow, or by adjusting the cooling or heating of thermal transfer fluid, in response to readings from one or more sensors as described above, and/or in response to time elapsed

In a sixth aspect, the present invention relates to a method of retrofitting a contactor stack as defined herein, into a submarine atmospheric control system.

For example, a submarine may already include a CO₂ waste storage, the method may comprise retrofitting the contactor stack to the CO₂ waste storage. Similarly, the submarine may may already include a means for directing airflow, the method may comprise retrofitting the contactor stack to the means for directing airflow, such as to a solution pump. For example, the method may further comprise connecting the contactor stack to one or more further components of the submarine atmospheric control system via a fluidic manifold. For example, a submarine may already include a heating means and/or cooling means, the method may comprise retrofitting the contactor stack to the heating means and/or cooling means. For example, a submarine may already include a reservoir of thermal transfer fluid and/or means for directing thermal transfer fluid, the method may comprise retrofitting the contactor stack to a reservoir of thermal transfer fluid and/or means for directing thermal transfer fluid.

This means that large costs associated with building new submarines can be reduced, and extensive structural modifications to existing systems are minimised. Further, the systems for preserving life on submarine vessels are important and can be a limiting factor in the duration that the submarine may remain submerged. Therefore, the present invention can advantageously extend the submarine's deployment. Further, the contactor stack can be retrofitted in isolation into a system which may already have a scrubber system for removing the CO2 from a liquid amine, thereby reducing costs and downtime.

In a seventh aspect, the present invention relates to a submarine comprising one or more contactor stacks as defined herein.

The invention will now be described with reference to the figures. The figures represent nonlimiting examples of the present invention.

Figure 1 shows a pair of CO₂ removal plates, an A-plate (1) and a B-plate (2), each plate has gas-facing side (3, 4) and thermal transfer fluid-facing side (5, 6).

Figure 2 shows two A-plates (1) mated with two B-plates (2) to define a set of gas flow channels (7) and thermal transfer fluid channel (8).

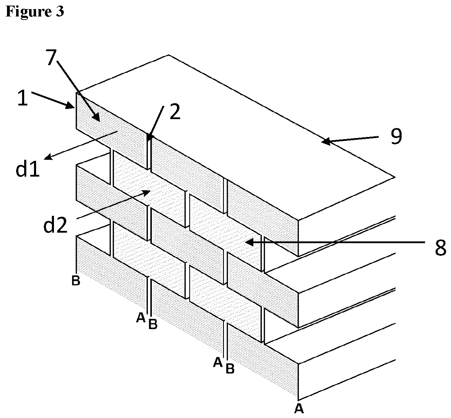

Figure 3 shows an isomorphic view of three A-plates mated with three B-plates to form a series of gas flow channels (7) and thermal transfer fluid channels (8). Top plate (9) has been added to seal the top-most gas and thermal transfer fluid channels. A corresponding bottom plate (not shown) is used to seal the lower gas and thermal transfer fluid channels. In this embodiment, gas flows in direction d1 and thermal transfer fluid flows in direction d2; in other embodiments, the flow of gas and thermal transfer fluid may be in the same direction, or flow directions may be changed during operation to optimise performance, or switch modes.

The structure of the gas facing side (3, 4) should be such that it can provide a support to high surface area solid absorbents, allowing for maximum gas/absorbent contact. In addition, the design and materials of this structure is such that good thermal transfer is possible between the active chemistry and the thermal transfer fluid. The length and cross-sectional geometry of the gas channel shall be chosen to provide optimal benefit for the particular demands and requirements of the scrubber system. If suitable, the gas channel may be filled or part-filled with a porous three-dimensional support for the active chemistry, in order to improve absorption/desorption performance.

The design of the thermal transfer fluid channels should be such that thermal transfer is optimised without an unnecessary burden of flow resistance to the system. Features such as fins or roughened surfaces commonly used in heat exchanger systems can be employed as appropriate.

The flow pathways of both the gas flow (7) and thermal transfer fluid channels (8) can be constructed in whichever combination and shape is best suited to the chemistry and operating conditions to be used. For example: the gas flow channels (7) may be configured such that they form a single continuous pathway through the stack, to maximise contact time between the CO₂ and active chemistry, whereas the thermal transfer fluid channels (8) may be configured so that they enable multiple short, parallel pathways to minimise flow resistance and pressure drop. In addition, the flow direction of each could be counter-current, co-current or cross-current depending on the requirements of the system.

In operation, gas flows down the gas flow channel(s) (7) and thermal fluid flows down the thermal transfer fluid channels (8). The gas may be air which may include exhaled or ambient CO₂ which is to be removed. The thermal transfer fluid may be any suitable substance chosen to have the correct operating temperature, flow characteristics or thermal capacity for the system. For example, a glycol coolant or water/steam system could be used. Of particular utility is a single substance that can be used for both heating and cooling as this eliminates carryover issues when switching between hot and cold operating modes.

An advantage of this arrangement is that the thermal transfer capability is never far from the site of action of the absorption/desorption chemistry. Therefore, thermal lag is reduced, and an even temperature is achieved throughout the stack. This even temperature allows for closer system control as chemical saturation will be more evenly distributed throughout the stack.

## Claims

1. A CO₂ removing module, for use in a contactor stack, the module comprising:
a first grooved plate (1) and a second grooved plate (2), wherein one or more spaces between the inner faces (3, 4) of the first grooved plate (1) and the second grooved plate (2) define one or more first channels (7);
a top plate (9) to seal the top-most first channel (7);
a bottom plate to seal the bottom-most first channel (7); and
wherein the one or more first channels (7) contain a CO₂ removing material.

2. A CO₂ removing module, for use in a contactor stack, the module comprising, a conduit structure having a crenelated perimeter (1, 2), wherein the spaces within the crenelations define one or more first channels (7), and wherein the in one or more first channels (7) contain a CO₂ removing material.

3. The CO₂ removing module of Claim 2, wherein the conduit structure having a crenelated perimeter (1, 2) is substantially prismatic.

4. The CO₂ removing module of Claim 2 or Claim 3, wherein the crenelations in the perimeter are substantially coincidental with the crenelations of the opposing face of perimeter.

5. The CO₂ removing module of Claim 4, wherein the crenelations in the perimeter are substantially square or rectangular, such that the spaces within each pair of substantially coincidental crenelations define one or more substantially rectangular first channels (7).

6. The CO₂ removing module of any one of the preceding claims, wherein the CO₂ removing material is a Metal-Organic Framework (MOF), a covalent organic framework, a zeolite, a polymer-based absorber, or an amine.

7. The CO₂ removing module of any one of the preceding claims, wherein the first grooved plate (1) and the second grooved plate (2), or the conduit structure having a crenelated perimeter (1, 2), is made from metal or ceramic.

8. The CO₂ removing module of any one of the preceding claims, wherein one or more first channels (7) are filled or part-filled with a porous three-dimensional support for the CO₂ removing material.

9. A contactor stack comprising a plurality of modules as defined in Claim 1, or any claim dependent thereon, wherein said modules are stacked such that the one or more spaces between the outer face (5) of the first grooved plate (1) and the outer face (6) of the second grooved plate (2) of proximate CO₂ removing modules define one or more second channels (8).

10. A contactor stack comprising a plurality of modules as defined in Claim 2, or any claim dependent thereon, wherein the conduit structures having crenelated perimeters (1, 2) are held proximate to each other such that the one or more spaces between the outer faces (5, 6) of proximate conduit structures having crenelated perimeters (1, 2) define one or more second channels (8).

11. The contactor stack of Claim 9 or Claim 10, wherein the first channels (7) are configured such that they form a single continuous pathway through the stack.

12. A method of removing CO₂ from air, using the contactor stack of any one of Claims 9 to 11, the method comprising:
flowing the air through the one or more first channels (7); and
flowing a thermal transfer fluid through the one or more second channels (8).

13. The method of Claim 12, wherein the flow direction of the air and of the thermal transfer fluid is counter-current, co-current, or cross-current; and/or wherein the thermal transfer fluid is cooled.

14. A method of retrofitting a contactor stack as defined in any one of Claims 9 to 11 into a submarine atmospheric control system.

15. A submarine comprising one or more contactor stack as defined in any one of Claims 9 to 11.
